# EUROPÄISCHE PATENTSCHRIFT

(11) **EP 0 434 788 B1**
(45) Veröffentlichungstag und Bekanntmachung des Hinweises auf die Patenterteilung: **29.09.1993**
(21) Anmeldenummer: 90908482.4
(22) Anmeldetag: 13.06.1990
(51) Int. Cl.: F02D 41/22, G05B 19/405

(54) **SYSTEM ZUR STEUERUNG EINER BRENNKRAFTMASCHINE**
CONTROL SYSTEM FOR AN INTERNAL-COMBUSTION ENGINE
SYSTEME POUR LA COMMANDE D'UN MOTEUR A COMBUSTION INTERNE

(30) Priorität: 07.07.1989 DE 3922419
(43) Veröffentlichungstag der Anmeldung: 03.07.1991
(73) Patentinhaber: ROBERT BOSCH GMBH, 70442 Stuttgart (DE)
(72) Erfinder: MÄNNLE, Erik, D-7602 Oberkirch (DE); LIEBEROTH-LEDEN, Bernd, D-7250 Leonberg 7 (DE); MAISCH, Wolfgang, D-7141 Schwieberdingen (DE)
(86) Internationale Anmeldenummer: DE9000445
(87) Internationale Veröffentlichungsnummer: WO9100957

(56) Entgegenhaltungen:
- EP-A- 81 630
- EP-A- 251 723
- EP-A- 308 840
- US-A- 4 414 950
- PATENT ABSTRACTS OF JAPAN, vol. 13, no. 52 (M-794) 07 Februar 1989, & JP-A-63 258231 (FUJITSU TEN LTD.) 25 Oktober 1988
- PATENT ABSTRACTS OF JAPAN, vol. 10, no. 374 (P-527) 12 Dezember 1986, & JP-A-61 166610 (SUMITOMO ELECTRIC IND LTD.) 28 Juli 1986

## Beschreibung

### Stand der Technik

Die Erfindung betrifft ein System zur Steuerung einer Brennkraftmaschine gemäß den Oberbegriffen der unabhängigen Patentansprüche.

In vielen Bereichen der Kraftzeugtechnik werden Positionen oder Stellungen von beweglichen Einstellelementen, wie Stellelementen, insbesondere in Verbindung mit Motorsteuerungen potentiometrisch erfaßt. Der bewegliche Abgriff der potentiometrischen Meßanordnung ist dabei mit der Welle des jeweiligen Einstellelements verbunden.

Der bewegliche Potentiometerkontakt führt auf der Schleiferbahn des Potentiometers zu Abrieb, der eine isolierende Schicht auf der Schleiferbahn bildet. Dadurch kann es zu einer Fehlinterpretation des Meßsignals oder zum Ausfall der Meßanordnung und damit der mit dieser verbundenen elektronischen Steuerung kommen. Die Verfügbarkeit des Systems wird somit erheblich eingeschränkt.

Der Erfindung liegt demnach die Aufgabe zugrunde, Maßnahmen anzugeben, die zu einer Erhöhung der Verfügbarkeit des Motorsteuerungssystems führen.

Bei elektronischen Motorleistungssteuerungen, deren Prinzip beispielweise aus der EP-A 171 641 oder aus der Veröffentlichung "Kolberg, G.; Elektronische Motorsteuerung für Kraftfahrzeuge, Motortechnische Zeitschrift, 46. Jahrgang, Heft 4, 1985" bekannt ist, werden Potentiometer zur Sensierung der Fahrpedalstellung und zur Lagerückmeldung der Drosselklappenposition eingesetzt. Bei derartigen Systemen wird die Drosselklappe auf elektronischem Wege unmittelbar und/oder mittelbar in Abhängigkeit von Meßgrößen, zu denen die den Fahrerwunsch repräsentierende Fahrpedalstellung zu zählen ist, durch ein elektronisches Steuergerät über einen mit der Drosselklappe und dem Lagerückmeldungspotentiometer verbundenen Stellmotor geregelt.

Ferner ist es bekannt, derartige Systeme im Leerlauffall zur Regelung der Leerlaufdrehzahl über die Drosselklappe einzusetzen. Dabei behält die Drosselklappe bei losgelassenem Fahrpedal den Leerlauföffnungswinkel bei, um die Brennkraftmaschine mit der vorgegebenen Leerlaufluft zu versorgen. Zur Regelung der Leerlaufdrehzahl wird die Drosselklappe dann zwischen ihrer minimalen und maximalen Leerlaufstellung eingeregelt.

Der vom Potentiometerschleifer auf der Potentiometerbahn erzeugte isolierende Abrieb wird durch die Bewegung des mit dem Potentiometer verbundenen Einstellelements im Fahrbetrieb hin- und hergeschoben und lagert sich besonders an den Wendepunkten der Bewegung auf der Potentiometerbahn ab. Dort bildet sich eine isolierende Schicht zwischen Potentiometerbahn und Schleifer und führt zu dem oben erwähnten Ausfall des Potentiometers und des Steuersystems.

Bei einer elektronischen Motorleistungssteuerung wird am häufigsten die Leerlaufstellung angefahren, so daß die Ausfallhäufigkeit des Potentiometers infolge Verschmutzungen in seiner Leerlaufstellung besonders groß ist. Die elektronische Motorleistungssteuerung reagiert auf diesen, mittels eines Plausibilitätsvergleichs mit einem weiteren Stellungssignal erkennbaren Fehler aus Sicherheitsgründen mit Leistungsbeschränkung, so daß es zu erheblichen Beeinträchtigungen der Verfügbarkeit des Kraftfahrzeugs kommen kann. Sicherheitsüberwachungen, die derartige Fehlerzustände erkennen und die entsprechenden Maßnahmen einleiten, sind beispielsweise aus der DE-OS 35 10 173 bekannt.

Es wird daher die Maßnahme eingeführt, daß in wenigstens einem vorgegebenen Betriebszustand der Brennkraftmaschine, im Schubbetrieb, das Einstellelement seine durch Meßgrößen, wie die Fahrpedalstellung, etc., festgelegte Stellung kurzzeitig verläßt und so der Abrieb aus dem kritischen Bereich entfernt wird. Kurzzeitig bedeutet in diesem Zusammenhang, daß die Zeitdauer, für die das Einstellelement seine festgelegte Stellung verläßt, gegenüber der mittleren Dauer des vorgegebenen Betriebszustands klein ist.

Für Systeme, bei denen der aktive Bewegungsbereich des Einstellelements nicht durch mechanische Anschläge begrenzt ist, wie das eingangs erwähnte elektronische Motorleistungssteuerungssystem mit integrierter Leerlaufregelung, wird im Schubbetrieb der Brennkraftmaschine das Einstellelement aus seinem aktiven Bewegungsbereich, den das Einstellelement im Normalbetrieb überstreicht, hinausgeführt und so die Verschmutzung aus dem aktiven Potentiometerbereich entfernt.

Aus der EP-A 130 341 ist ein elektronisches Steuersystem der Brennkraftmaschine im Schubbetrieb bekannt. In Abhängigkeit von vorgegebenen Betriebsparametern, z.B. Drehzahl und Motortemperatur, wird bei losgelassenem Fahrpedal oder geschlossener Drosselklappe die Kraftstoffzufuhr abgeschaltet. Die Schubabschaltung findet dabei dann statt, wenn die Drehzahl oberhalb einer vorgegebenen Drehzahl sich befindet, die Motortemperatur über z.B. 80° C liegt und Fahrpedal und/oder Drosselklappe in Leerlaufstellung sind.

Die EP-A 81 630 zeigt ein elektronisches Gaspedalsystem mit einem Potentiometer zur Bestimmung der Stellung der elektronisch gesteuerten Drosselklappe. Vor Beginn eines Betriebszyklus, in der Startphase, wird die Drosselklappe zur Bestimmung ihrer mechanischen Endstellungen bzw. des zur Verfügung stehenden Stellbereichs in die beiden Endstellungen, zuerst in die untere, dann in die obere, geführt. Diese Maßnahme dient zur Bestimmung der Lage der mechanischen Endstellungen, und daraus resultierend zur Bestimmung des zur Verfügung stehenden Stellbereichs. Die durch diese Maßnahme zwangsläufig vorgenommene Verschiebung eines möglichen Abriebs reicht erfahrungsgemäß nicht aus, die Verfügbarkeit des Systems sicherzustellen.

Die Zusammenfassung der JP-A 63/258 231 zeigt Maßnahmen zur Vermeidung von Ruckeln im Schubbetrieb. Das die Luftzufuhr steuernde Ansteuersignal ist mit einem niederfrequenten Anteil beaufschlagt, so daß die Drosselklappe um den Schaltpunkt des Leerlaufschalters oszilliert. Hinweise, welche die vorbeugende Reinigung von Potentiometer zum Gegenstand haben, sind nicht zu entnehmen.

### Zeichnung

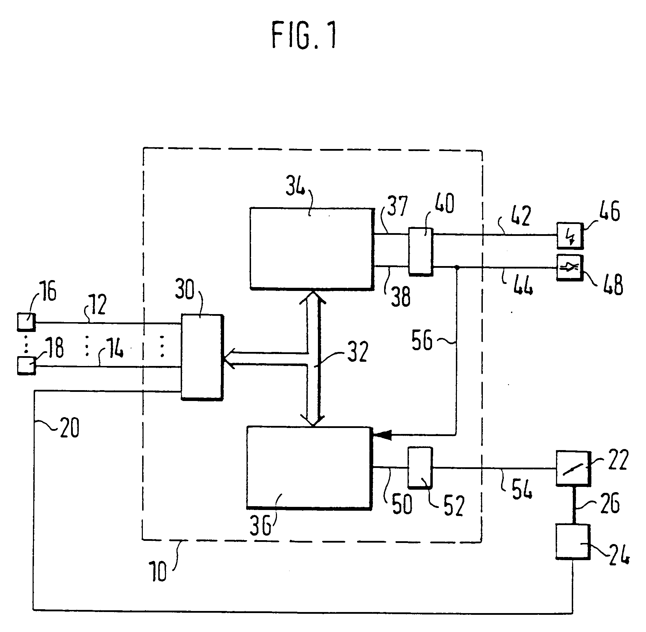

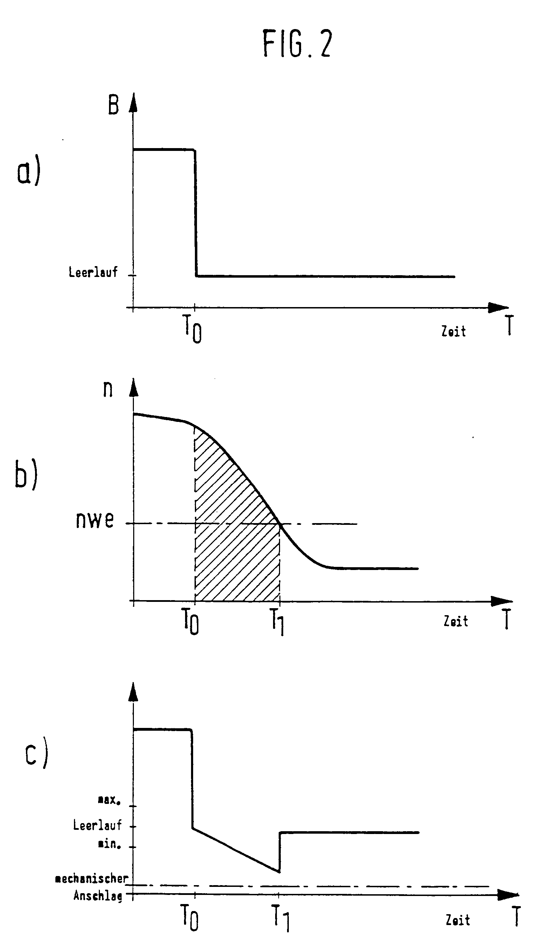

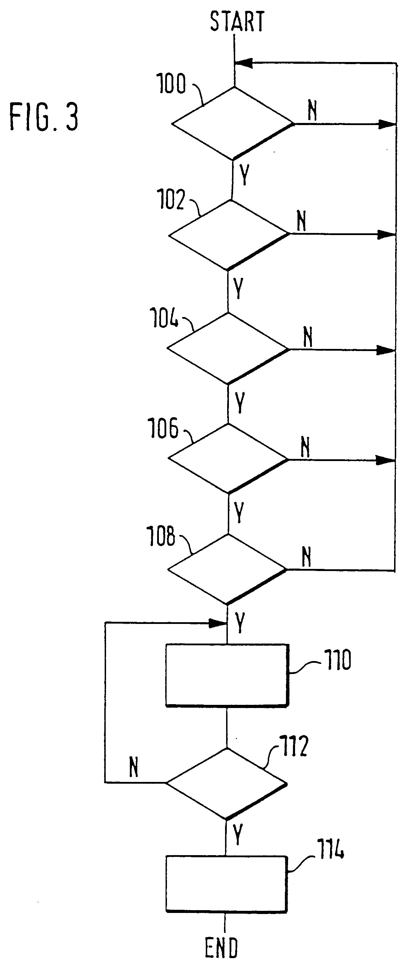

In Fig. 1 ist ein Übersichtsblockschaltbild eines Motorsteuerungssystems mit Leerlaufregelung dargestellt, während Fig. 2 zur Erläuterung der erfindungsgemäßen Maßnahmen Zeitverläufe von Fahrpedalposition, Drehzahl und Drosselklappenposition zeigt. Fig. 3 beschreibt schließlich die erfindungsgemäße Vorgehensweise anhand eines Flußdiagramms.

### Beschreibung von Ausführungsbeispielen

Im Übersichtsblockschaltbild nach Fig. 1 ist ein Motorsteuerungssystem skizziert, dem über die Eingangsleitungen 12 bis 14 von entsprechenden Meßeinrichtungen 16 bis 18 Betriebskenngrößen der Brennkraftmaschine und des Kraftfahrzeugs, wie Motortemperatur, Drehzahl, Batteriespannung, zugeführte Luftmenge, Position eines vom Fahrer betätigbaren Bedienelements, etc zugeführt werden. Ferner wird dem Motorsteuerungssystem 10 über die Leitung 20 die Positon des Leistungsstellgliedes 22 der Brennkraftmaschine zugeleitet, bei dem es sich vorzugsweise um eine die Luftzufuhr zur Brennkraftmaschine beeinflussende Drosselklappe handelt. Die Leitung 20 verbindet dabei das Motorsteuerungssystem 10 mit einer Meßeinrichtung 24 für die Stellung des Leistungsstellgliedes, welche über eine Verbindung 26 mit dem Leistungsstellglied 22 gekoppelt ist.

In einem Ausführungsbeispiel handelt es sich bei der Meßeinrichtung 24 um ein Potentiometer, dessen beweglicher Abgriff mit der Verbindung 26 und damit starr mit dem Leistungsstellglied 22 verbunden ist.

Das Motorsteuerungssystem 10 umfaßt einen Eingangsbereich 30, dem die Eingangsleitungen 12 bis 14 und 20 zugeführt sind. Dort wird die Aufbereitung der Eingangssignale, insbesondere eine Analog-Digital-Wandlung vorgenommen. Der Eingangsbereich 30 ist über ein internes Leitungssystem 32 mit einer Rechen- bzw. Steuereinheit 34 und einer weiteren Rechen- bzw. Steuereinheit 36 verbunden. Die Recheneinheit 34 steuert in Abhängigkeit der ihr über das Leitungssystem 32 zugeführten Betriebskenngrößen der Brennkraftmaschine und des Kraftfahrzeugs Zündung und Einspritzung. Die in der Recheneinheit 34 bestimmten Ansteuerwerte für Zündung und Einspritzung werden über die Ausgangsleitungen 36 und 38, die Endstufenschaltung 40 und die Ausgangsleitungen 42 und 44 des Motorsteuerungssystems 10 an die entsprechenden Stelleinrichtungen 46 für die Zündung der Brennkraftmaschine und 48 für die zuzumessende Kraftstoffmenge weitergeleitet.

Die Recheneinheit 36 berechnet ein Ansteuersignal in Abhängigkeit der ihr über das Leitungssystem 32 zugeführten Betriebsparameter, wobei die Ansteuersignalgröße über die Ausgangsleitung 50, den Ausgangsbereich 52, der insbesondere eine Endstufenschaltung und/oder eine Digital/Analog-Wandlung umfaßt, sowie die Leitung 54 an das elektrisch betätigbare Leistungsstellglied 22 abgegeben wird. Ferner kann der Recheneinheit 36 über eine Leitung 56 das Ansteuersignal für das Stellglied 48 der Kraftstoffzumessung zugeführt werden.

Die erfindungsgemäße Vorgehensweise, die in der skizzierten Anordnung nach Fig. 1 durchgeführt wird, ist im folgenden am Beispiel der in Figur 2a bis 2c dargestellten Zeitverläufe näher ausgeführt.

Zum Zeitpunkt T₀ geht der Fahrer vom Gaspedal, d.h. das Fahrpedal nimmt zum Zeitpukt T₀ seine Leerlaufposition ein, und die Drosselklappe wird in Richtung Schließen bewegt. Die Drosselklappenposition erreicht ihre Leerlaufposition zum Zeitpunkt T₀, bzw. geringfügig nachdem das Fahrpedal seine Ruheposition erreicht hat. Minimale Leerlaufposition und Vollastposition der Drosselklappe definieren dabei den aktiven Betriebsbereich des Drosselklappenpotentiometers. Befindet sich die Motordrehzahl oberhalb eines bestimmten Wertes bei Leerlaufstellung des Fahrpedals oder der Drosselklappe und ist die Motortemperatur größer einer vorgegebenen Schwelle (z.B. 80° C), so reagiert das Kraftstoffversorgungssystem der Brennkraftmaschine mit Schubabschaltung. Bei sinkender Motordrehzahl beginnt das Kraftstoffversorgungssystem bei einer vorbestimmten Wiedereinsetzdrehzahl (n_{We}), die in der Regel von Motortemperatur und weiteren Parametern abhängt, erneut mit Kraftstoffzufuhr. In Figur 2b, dem zeitlichen Drehzahlverlauf, ist dieser Punkt zum Zeitpunkt T₁ gegeben. Der Bereich der Kraftstoffabschaltung ist in diesem Schaubild schraffiert dargestellt. Mit Unterschreiten der Wiedereinsetzdrehzahl beginnt das Kraftstoffversorgungssystem erneut mit Kraftstoffzufuhr.

Solange sich die Brennkraftmaschine in der wie oben dargestellten Schubabschneidephase befindet, wird entsprechend dem erfindungsgemäßen Verfahren die Drosselklappe beim Schließen über den Leerlaufpunkt hinaus zu einer Position gefahren, die im normalen Fahrbetrieb nicht benutzt wird. Dieser Vorgang ist in Figur 2c dargestellt. Nach Erreichen dieser Position, die unmittelbar vor dem mechanischen Anschlag liegen kann, oder nach Unterschreiten der Wiedereinsetzdrehzahl, wird die Drosselklappe sofort auf die erforderliche Leerlaufposition zurückgestellt. In Figur 2c ist dies durch eine sprungförmige Änderung der Drosselklappenposition zum Zeitpunkt T₁ dargestellt. Durch das zwischen den Zeitpunkten T₀ und T₁ in Figur 2c erfolgte Überfahren der Leerlaufposition der Drosselklappe wird der Schmutz, der sich bevorzugt an der Leerlaufposition der Drosselklappe ansammelt und dort zu einer isolierenden Schicht zwischen Schleifer und Potentiometerbahn führen kann, in einen unkritischen Bereich verschoben.

Realisiert wird der dargestellte Drosselklappenpositionsverlauf vorzugsweise in einem Rechner.

Ein Beispiel für ein derartiges Rechnerprogramm ist im Flußdiagramm nach Fig. 3 skizziert. Nach Start des Programmteils wird im ersten Abfrageschritt 100 das Positionssignal des Fahrpedals dahingehend ausgewertet, ob sich das Fahrpedal in seiner Leerlaufstellung befindet. Diese Abfrage kann sowohl durch Vergleich des Stellungssignals des Fahrpedals mit einem vorgegebenen Leerlaufwert, als auch durch Auswertung einer Zustandsänderung eines mit der Leerlaufstellung des Fahrpedals gekoppelten Schalters geschehen. Befindet sich das Fahrpedal in seiner Leerlaufstellung, so wird in Abfrageschritt 102 überprüft, ob bei in seiner Leerlaufstellung befindlichem Fahrpedal sich die Drehzahl der Brennkraftmaschine oberhalb einer vorgegebenen Drehzahlschwelle, der Wiedereinsetzdrehzahl, befindet. Die Abfrageschritte 100 und 102 stellen somit den Betriebszustand Schubbetrieb der Brennkraftmaschine bzw. des Kraftfahrzeugs fest. Sind für die Definition des Schubbetriebs, wie oben erwähnt, neben der Fahrpedalposition- und der Drehzahlbedingung weitere Bedingungen vorgesehen, werden diese im Schritt 102 ebenfalls abgefragt. Bei einer negativen Antwort in einem der Schritte 100 oder 102 wird der Programmteil beginnend mit Schritt 100 erneut durchgeführt.

Im Schubbetrieb, oberhalb der Wiedereinsetzdrehzahlschwelle wird bekanntermaßen eine Abschaltung des Kraftstoffes vorgenommen. Um die Maßnahme, zur Reinigung der Potentiometerbahn des mit dem Leistungsstellglied verbundenen Potentiometers durch ein Schließen des Leistungsstellgliedes über seinen Leerlaufpunkt hinaus, ohne Beeinflussung der Qualität des Abgases vornehmen zu können, muß sichergestellt sein, daß die Kraftstoffzufuhr zur Brennkraftmaschine abgeschaltet ist. Dies geschieht am wirkungsvollsten durch einen Abfrageschritt 104, mit dessen Hilfe unter Auswertung des Einspritzsignals selbst, d.h. des Ansteuersignals der Einspritzventile, abgefragt wird, ob die Kraftstoffzufuhr tatsächlich unterbrochen ist oder nicht. Diese Abfrage ist notwendig, da nach Eintreten des Schubbetriebs die tatsächliche Abschaltung der Kraftstoffzufuhr erst nach einer gewissen Totzeit vollständig erfolgt. Die direkte Auswertung des Einspritzsignals ermöglicht eine exakte Erkennung der Kraftstoffunterbrechung. Alternativ wäre anstelle des Abfrageschritts 104 ein Zeitfilter vorzusehen, dessen Verzögerungszeitdauer so bemessen ist, daß ein vollständiges Abschalten der Kraftstoffzufuhr sichergestellt ist.

Wird im Abfrageschritt 104 die Unterbrechung der Kraftstoffzufuhr zweifelsfrei festgestellt oder ist die oben erwähnte Verzögerungszeitdauer abgelaufen, so wird mit den Abfrageschritten 106 und 108 fortgefahren.

Ein Schließen der Drosselklappe über ihre Leerlaufstellung hinaus führt im Schubbetrieb der Brennkraftmaschine bzw. des Kraftfahrzeugs gegenüber einer sich in Leerlaufstellung befindlichen Drosselklappe zu einem erhöhten Unterdruck im Ansaugrohr der Brennkraftmaschine. Dieser erhöhte Unterdruck kann eine Abgasverschlechterung der Brennkraftmaschine beim Schließen der Drosselklappe über ihre Leerlaufstellung hinaus zur Folge haben. Durch die Erhöhung des Unterdrucks verstärkt sich die Ansaugwirkung des Verbrennungsmotors, wodurch beispielsweise über die Kolbendichtringe mehr Öl aus dem Kurbelgehäuse angesaugt wird, als dies bei in Leerlaufstellung befindlicher Drosselklappe der Fall sein würde. Daher kann gemäß Schritt 106 eine Abfrage vorgesehen sein, ob die Drehzahl der Brennkraftmaschine im Schubbetrieb unterhalb einer vorgegebenen Drehzahlschwelle liegt. Diese Abfrage klammert den Bereich hoher Drehzahlen, d.h. den Bereich eines zu hohen Unterdrucks im Ansaugrohr, aus, um die oben skizzierte Nachteile zu vermeiden. Liegt die Drehzahl der Brennkraftmaschine oberhalb des vorgebenen Drehzahlwertes, wird der Programmteil beginnend mit Schritt 100 erneut durchgeführt. Liegt die Drehzahl unterhalb des Schwellwertes, wird mit dem Abfrageschritt 108 fortgefahren.

Um die Durchführung der erfindungsgemäßen Vorgehensweise in einem Drehzahlbereich in der Nähe der Wiedereinsetzdrehzahlschwelle und die damit verbundenen Nachteile mit Blick auf die Abgaszusammensetzung, die bei einer möglicherweise wiedereinsetzenden Kraftstoffzufuhr bei sich in einer Stellung jenseits ihrer Leerlaufstellung befindlichen Drosselklappe auftreten würde, zu vermeiden, wird eine zweite Drehzahlschwelle, die oberhalb der Wiedereinsetzdrehzahlschwelle liegt und sich dieser anpaßt, vorgegeben und im Schritt 108 die Drehzahl der Brennkraftmaschine auf diese zweite Schwelle hin überprüft. Liegt die Drehzahl oberhalb dieser zweiten Schwelle, wird im Programm fortgefahren, anderenfalls wird das Programm erneut gestartet.

Die Abfrageschritte 106 und 108 stellen eine vorteilhafte Ergänzung der erfindungsgemäßen Vorgehensweise dar, eine Ausführung des Flußdiagramms nach Fig. 3 unter Verzicht auf die Abfrageblöcke 106 und 108 ist ebenfalls möglich.

Die Weiterführung des Programmteils erfolgt im Schritt 110 mit der Durchführung des eigentlichen Schließvorgangs, d. h. dem Schließen der Drosselklappe über die Stellung hinaus, die ihrer Leerlaufstellung entspricht. Im Schritt 110 wird daher die Drosselklappe einer vorgegebenen Funktion entsprechend über ihre Leerlaufstellung hinaus in Richtung ihres mechanischen Anschlages gefahren. Der bewegliche Abgriff des Potentiometers bleibt dabei mit der Potentiometerbahn in Kontakt.

In einem Ausführungsbeispiel hat es sich als geeignet erwiesen, die Drosselklappe durch Subtraktion eines festen, vorbestimmten Wertes von ihrem in der Recheneinheit 34 vorgegebenen Leerlaufwert über ihre Leerlaufstellung bis kurz vor Erreichen ihres mechanischen Anschlags zu schließen. Dieser Schließvorgang erfolgt dabei gesteuert und bleibt ohne Einfluß auf die von der Recheneinheit 36 ausgeführten Lageregelung der Drosselklappe, da die Regeleinheit für die Dauer des Wisch- oder Schließvorgangs auf ihrem Leerlaufwert, der vor Beginn des Wischvorgangs eingestellt wurde, eingefroren wird. Dadurch wird vermieden, daß die Regeleinheit infolge der durch das Schließen der Drosselklappe entstehenden Regeldifferenz zwischen Soll- und Istwert dem Schließvorgang entgegenarbeitet.

Um negative Auswirkung auf das Betriebsverhalten der Brennkraftmaschine oder des Kraftfahrzeugs durch den Schließvorgang zu vermeiden, ist darüberhinaus vorgesehen, die Drosselklappe nur kurzzeitig zu schließen und sie dann wieder auf ihren Leerlaufwert, der von der Regeleinheit vorgegeben wird, zurückzuführen. Daher ist mit Schritt 112 eine Zeitabfrage eingefügt, die überprüft, ob eine vorbestimmte Zeitdauer vergangen ist, seitdem die Drosselklappe über ihre Leerlaufstellung hinaus geschlossen wurde. Diese Zeitdauer ist dabei so zu wählen, daß einerseits die Leerlaufposition der Drosselklappe zur Verschiebung des isolierenden Abriebs um einen ausreichenden Betrag verlassen wird und daß andererseits durch diese Maßnahme keine negativen Auswirkungen beispielsweise mit Blick auf die Abgaszusammensetzung oder das Betriebsverhalten der Brennkaftmaschine zu erwarten sind. Eine Zeitdauer im Millisekunden- bis Sekundenbereich erwies sich als geeignet.

Ist diese vorgegebene Zeit abgelaufen, wird im Schritt 114 die Drosselklappe sprungförmig auf ihre Leerlaufstellung zurückgeführt und der Programmteil erneut gestartet.

Anstelle der Vorgehensweise nach den Schritten 110 und 112 besteht auch die Möglichkeit, die Drosselklappe einer vorgegebenen, beispielsweise lineare Zeitfunktion folgend über ihre Leerlaufstellung hinaus in Richtung ihres mechanischen Anschlages zu führen. Diese Maßnahme kann beispielsweise durch einen entspechenden Eingriff in die Sollwertvorgabe des Lageregelkreises der Droselklappe erfolgen. Der Schließvorgang erfolgt in diesem Ausführungsbeispiel geregelt. Bei Erreichen eines vorgegebenen Endwertes wird in diesem Fall die Drosselklappe sprungförmig auf ihren Leerlaufwert zurückgesetzt.

Neben der Schubbetriebsphase kann das erfindungsgemäße Verfahren auch in der Vor-Start-Phase oder nach Abstellen der Brennkraftmaschine angewendet werden.

Selbstverständlich können die entsprechende Maßnahmen auch im Bereich der Vollastposition der Drosselklappe Anwendung finden.

Die erfindungsgemäßen Maßnahmen sind neben den Systemen, die über eine elektrisch gesteuert Drosselklappe verfügen, auch auf andere mechanische Systeme mit Stellantrieben übertragbar, sofern mit dem Stellantrieb ein Potentiometer zur Lagebestimmung verbunden ist. Dies ist insbesondere bei einer elektrisch gesteuerten Regelstange einer Dieselbrennkraftmaschine der Fall.

Das oben beschriebene Ausführungsbeispiel umfaßt ein elektronisches Steuersystem für die Motorleistung einer Brennkraftmaschine, welches über die Stellung einer Drosselklappe die Motorleistung in allen Betriebsbereichen steuert. Dieses Einstellelement verfügt daher, um auch die Luftzufuhr im Leerlaufzustand sicherzustellen, über einen aktiven Bewegungsbereich, der betragsmäßig kleiner als der maximale Bewegungsbereich zwischen den beiden mechanischen Endanschlägen ist. Daher ist ein kurzzeitiges Schließen der Drosselklappe über ihre Leerlaufstellung hinaus möglich.

Bei System, bei denen das Einstellelement über einen aktiven Bewegungsbereich verfügt, der gleich dem maximalen Bewegungsbereich zwischen den beiden mechanischen Endanschlägen ist, und das Einstellelement mit einem Stellungsgeber mit den eingangs aufgezeigten Problemen verbunden ist, kann ein Verlassen des aktiven Bewegungsbereichs nicht durchgeführt werden.

Daher werden die Maßnahmen dort in der Form durchgeführt, daß das Einstellelement in wenigstens einem vorgegebenen Betriebszustand kurzzeitig aus der in diesem Betriebszustand vorgebenenen Stellung heraus bewegt wird und auf diese Weise der schädliche Abrieb, der zu einer Fehlfunktion des Stellungsgebers führt, aus dem kritischen in einen weniger kritischen Bereich verschoben wird.

Im Schubbetrieb der Brennkraftmaschine liegt das Einstellelement in der Regel an seinem Leerlaufanschlag an. Die Reinigung der Potentiometerbahn erfolgt durch eine kurzeitige Bewegung des Einstellelements auf dieser Anschlagsstellung in eine geöffnete Stellung. Die anderen, oben beschriebenen Maßnahmen werden analog angewendet.

## Patentansprüche

1. Verfahren zur Steuerung einer Brennkraftmaschine eines Kraftfahrzeugs
- wobei wenigstens ein elektrisch steuerbares Einstellelement zur Beeinflussung der Leistung der Brennkraftmaschine,
- wenigstens eine Meßanordnung in der Art eines Potentiometers, welche mit dem wenigstens einen Einstellelement fest verbunden ist und die Stellung dieses Einstellelements feststellt,
- und wenigstens eine weitere Meßanordnung zur Erfassung wenigstens einer Meßgröße vorhanden ist,
- wobei die Stellung des Einstellelements von einer mittelbar und/oder unmittelbar in Abhängigkeit der wenigstens einen Meßgröße festgelegten Sollstellung bestimmt wird,
- wobei in einem vorgegebenen Betriebzustand, während des Schubbetriebs der Brennkraftmaschine, das Einstellelement im Sinne eines Verlassens der in diesem Betriebszustand festgelegten Sollstellung unabhängig von der wenigstens einen Meßgröße betätigt wird,
- diese Betätigung kurzzeitig erfolgt
- und das Einstellelement in einen Stellungsbereich führt, der im Normalbetrieb nicht oder selten benutzt wird und der von der Sollstellung ausgehend in Richtung eines Endanschlags des Einstellelements liegt, so daß sich der auf der Potentiometerbahn bildende Abrieb bzw. Schmutz in diesen Bereich geführt wird,
- wobei der mechanische Endanschlag des Einstellelement nicht erreicht wird.

2. Verfahren nach Anspruch 1, dadurch gekennzeichnet, daß das Einstellelement in Betriebsbereichen mit Kraftstoffabschaltung im Sinne eines Verlassens seiner vorgegebenen Sollstellung betätigt wird.

3. Verfahren nach einem der vorhergehenden Ansprüche, dadurch gekennzeichnet, daß die Betätigung des Einstellelements gesteuert durch Veränderung der Stellung des Einstellelements um einen vorgegebenen Betrag erfolgt.

4. Verfahren nach einem der vorhergehenden Ansprüche, dadurch gekennzeichnet, daß nach Ablauf einer vorgegebenen Zeitdauer das Einstellelement sprungförmig in die Sollstellung zurückkehrt.

5. Verfahren nach Anspruch 3, dadurch gekennzeichnet, daß bei Erreichen einer vorgegebenen Stellung des Einstellelements ein sprungförmiger Rücksprung des Einstellelements in seine Sollstellung erfolgt.

6. Verfahren nach Anspruch 2, dadurch gekennzeichnet, daß bei Wiederaufnahme der Kraftstoffzuführung eine sprungförmige Rückführung des Einstellelements in seine Sollstellung stattfindet.

7. Verfahren nach einem der vorhergenden Ansprüche, dadurch gekennzeichnet, daß die Sollstellung die Leerlaufstellung des Einstellelements ist und die Betätigung derart efolgt, daß das Einstellelement über die Leerlaufstellung hinaus in Richtung auf seinen minimalen Anschlag erfolgt.

8. Verfahren nach einem der vorhergenden Ansprüche, dadurch gekennzeichnet, daß die Betätigung des Einstellelements in einem von einer oberen und unteren Schwelle begrenzten Drehzahlbereich erfolgt.

9. Verfahren nach einem der vorhergenden Ansprüche, dadurch gekennzeichnet, daß das Einstellelement eine Drosselklappe ist.

## Claims

1. Method for controlling an internal-combustion engine of a motor vehicle,
- wherein at least one electrically controllable setting element for influencing the power of the internal-combustion engine,
- at least one measuring arrangement in the manner of a potentiometer, which is firmly connected to the at least one setting element and which fixes the position of this setting element,
- and at least one further measuring arrangement for detecting at least one measured quantity are present,
- wherein the position of the setting element is determined by a desired position fixed indirectly and/or directly in dependence on the at least one measured quantity,
- wherein, in a predetermined operating state, during the deceleration mode of the internal-combustion engine, the setting element is actuated, independently of the at least one measured quantity, with the effect of leaving the desired position fixed in this operating state,
- this actuation takes place briefly
- and guides the setting element into a position range which is not used or seldom used during normal operation and which, starting from the desired position, is in the direction of a limit stop of the setting element, so that the abrasion or dirt forming on the potentiometer path is guided into this range,
- and wherein the mechanical limit stop of the setting element is not reached.

2. Method according to Claim 1, characterised in that, in operating ranges with fuel cut-off, the setting element is actuated with the effect of leaving its predetermined desired position.

3. Method according to one of the preceding claims, characterised in that the actuation of the setting element takes place in a controlled manner as a result of a variation in the position of the setting element by a predetermined amount.

4. Method according to one of the preceding claims, characterised in that, after a predetermined period of time has elapsed, the setting element returns abruptly into the desired position.

5. Method according to Claim 3, characterised in that, when a predetermined position of the setting element is reached, an abrupt return of the setting element into its desired position takes place.

6. Method according to Claim 2, characterised in that, when the fuel feed is resumed, an abrupt return of the setting element into its desired position takes place.

7. Method according to one of the preceding claims, characterised in that the desired position is the idling position of the setting element, and the actuation takes place in such a way that the setting element is displaced beyond the idling position in the direction of its minimum stop.

8. Method according to one of the preceding claims, characterised in that the actuation of the setting element takes place in a speed range limited by an upper and a lower threshold.

9. Method according to one of the preceding claims, characterised in that the setting element is a throttle flap.

## Revendications

1. Procédé pour la commande d'un moteur à combustion interne d'un véhicule automobile, pour lequel il est prévu :
- au moins un élément de réglage susceptible d'être commandé électriquement pour influencer la puissan ce du moteur à combustion interne
- au moins un agencement de mesure du type d'un potentiomètre, qui est solidaire de l'élément de réglage précité et qui constate la position de cet élément de réglage
- et au moins un autre agencement de mesure pour détecter au moins une grandeur de mesure
- procédé dans lequel la position de l'élément de réglage est déterminée à partir d'une position de consigne fixée indirectement et/ou directement en fonction d'au moins une grandeur de mesure
- tandis que dans un état de fonctionnement prédéfini, pendant le fonctionnement poussé du moteur à combustion interne, l'élément de réglage est actionné indépendamment de la grandeur de mesure précitée dans le sens de l'abandon de la position de consigne fixée dans cet état de fonctionnement
- cet actionnement s'effectue en peu de temps
- et il amène l'élément de réglage dans une zone de positionnement, qui n'est pas utilisée ou rarement utilisée en fonctionnement normal et qui se situe à partir de la position de consigne en direction d'une butée terminale de l'élément de réglage, de sorte que l'abrasion ou l'encrassement se formant sur la piste du potentiomètre est amené dans cette zone
- tandis que la butée mécanique terminale de l'élément de réglage n'est pas atteinte.

2. Procédé selon la revendication 1, caractérisé en ce que l'élément de réglage est actionné dans les zones de fonctionnement avec coupure du carburant dans le sens d'un abandon de sa position de consigne prédéfinie.

3. Procédé selon une des précédentes revendications, caractérisé en ce que l'actionnement de l'élément de réglage commandé s'effectue par modification de la position de l'élément de réglage d'une quantité prédéfinie.

4. Procédé selon une des précédentes revendications, caractérisé en ce qu'après l'écoulement d'une période prédéfinie, l'élément de réglage revient brusquement dans la position de consigne.

5. Procédé selon la revendication 3, caractérisé en ce que lorsqu'une position prédéfinie de l'élément de réglage est atteinte, il s'effectue un retour brusque de l'élément de réglage dans sa position de consigne.

6. Procédé selon la revendication 2, caractérisé en ce que lorsque l'alimentation en carburant reprend, l'élément de réglage revient brusquement dans sa position de consigne.

7. Procédé selon une des précédentes revendications, caractérisé en ce que la position de consigne est la position de ralenti de l'élément de réglage et l'actionnement s'effectue, de façon que l'élément de réglage se déplace au-delà de la position de ralenti en direction de sa butée minimale.

8. Procédé selon une des précédentes revendications, caractérisé en ce que l'actionnement de l'élément de réglage s'effectue dans une étendue de vitesse de rotation délimitée par un seuil supérieur supérieur et un seuil inférieur.

9. Procédé selon une des précédentes revendications, caractérisé en ce que l'élément de réglage est un clapet d'étranglement.
